# EUROPEAN PATENT APPLICATION

(11) **EP 2 336 250 A1**
(43) Date of publication of application: **22.06.2011**
(21) Application number: 10194923.8
(22) Date of filing: 14.12.2010
(51) Int. Cl.: C09D 11/00

(54) **Inkjet emulsion ink**

(30) Priority: 21.12.2009 US 288451 P
(71) Applicant: Kabushiki Kaisha Toshiba, Tokyo 105-8001 (JP); Toshiba TEC Kabushiki Kaisha, Tokyo 141-8664 (JP)
(72) Inventor: Akiyama, Ryozo, Shinagawa-ku Tokyo 141-8664 (JP); Yoshida, Maiko, Shinagawa-ku Tokyo 141-8664 (JP); Hara, Takafumi, Shinagawa-ku Tokyo 141-8664 (JP)
(74) Representative: Gendron, Vincent Christian

(57) **Abstract**

According to one embodiment, an inkjet emulsion ink includes a pigment, an aqueous liquid, an oil liquid, and a polyoxyethylene hydrogenated castor oil. The polyoxyethylene hydrogenated castor oil emulsifies the aqueous liquid and the oil liquid. The oil liquid is at least partly an aliphatic monoalcohol having 6 to 9 carbon atoms.

## Description

### FIELD

Embodiments described herein relates generally to an inkjet emulsion ink.

### BACKGROUND

Emulsion type inkjet ink containing an aqueous component and an oil component is proposed. It is because such an ink can have advantages of both aqueous ink and oil ink.

There is an increasing demand for inkjet emulsion inks suitable for printing on paper medium. Specifically, there is a demand for improved dryness and permeability to form high-quality images on paper medium.

### BRIEF DESCRIPTION OF THE DRAWINGS

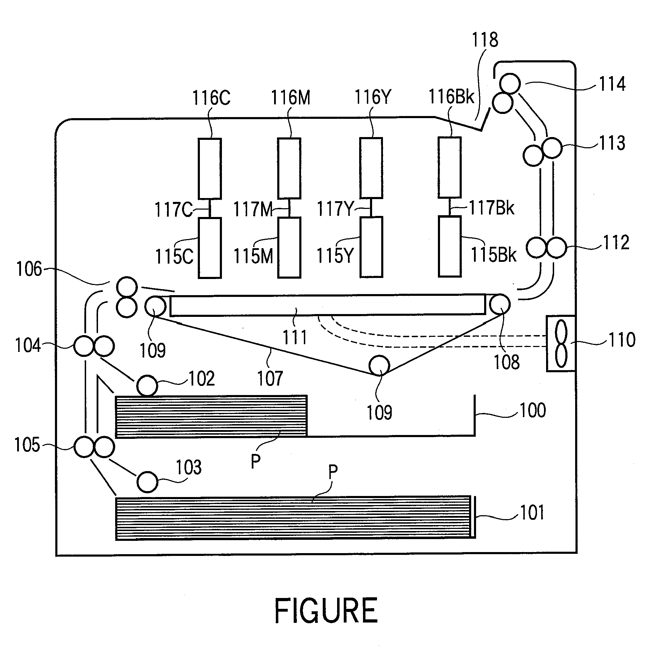

The single figure shows an example of an inkjet recording apparatus.

### DETAILED DESCRIPTION

In general, according to one embodiment, an inkjet emulsion ink includes a pigment, an aqueous liquid, an oil liquid, and a polyoxyethylene hydrogenated castor oil. The polyoxyethylene hydrogenated castor oil emulsifies the aqueous liquid and the oil liquid. The oil liquid is at least partly an aliphatic monoalcohol having 6 to 9 carbon atoms.

The following specifically describes embodiments.

In the inkjet recording apparatus in the Figure, paper cassettes 100 and 101 each of which holds paper P of different size. A paper feed roller 102 or 103 takes out the paper P in response to the selected paper size from the paper cassette 100 or 101 and conveys it to conveyance roller pairs 104 and 105 and a resist roller pair 106.

A tension is given to a conveyance belt 107 by a drive roller 108 and two driven rollers 109. Holes are provided at predetermined intervals on the surface of the conveyance belt 107, and for the purpose of adsorbing the paper P onto the conveyance belt 107, a negative-pressure chamber 111 connected to a fan 110 is installed in the inside of the conveyance belt 107. Conveyance roller pairs 112, 113, and 114 are installed in the downstream of the paper conveyance direction of the conveyance belt 107.

Four rows of inkjet heads that eject inks on a paper according to image data are disposed above the conveyance belt 107. An inkjet head 115C which ejects a cyan (C) ink, an inkjet head 115M which ejects a magenta (M) ink, an inkjet head 115Y which ejects a yellow (Y) ink, and an inkjet head 115Bk which ejects a black (Bk) ink are arranged in this order from the upstream. Further, these inkjet heads 115C, 115M, 115Y, and 115Bk are provided with a cyan (C) ink cartridge 116C, a magenta (M) ink cartridge 116M, a yellow (Y) ink cartridge 116Y, and a black (Bk) ink cartridge 116Bk, respectively, each of which contains an ink of each color. These cartridges are connected to the inkjet heads via tubes 117C, 117M, 117Y, and 117Bk, respectively.

An image forming operation of the apparatus for inkjet printing having a configuration as described above is described below.

First, image processing for printing by an image processor (not shown) is initiated, and image data for printing are transferred to the respective inkjet heads 115C, 115M, 115Y, and 115Bk. Also, a sheet of the paper P of a selected paper size is taken out one by one from the paper cassette 100 or 101 by the paper feed roller 102 or 103 and conveyed to the conveyance roller pairs 104 and 105 and the resist roller pair 106. The resist roller pair 106 corrects a skew of the paper P and conveys the paper at a predetermined timing.

The negative-pressure chamber 111 draws air through the holes of the conveyance belt 107, and therefore, the paper P is conveyed in a state that it is adsorbed onto the conveyance belt 107 in a lower side of the inkjet heads 115C, 115M, 115Y, and 115Bk. Thus, the respective inkjet heads 115C, 115M, 115Y, and 115Bk and the paper P can keep a fixed space from each other. The ink of each color is ejected from each of the inkjet heads 115C, 115M, 115Y, and 115Bk in synchronism with the timing for conveying the paper P from the resist roller pair 106. Thus, a color image is formed at a desired position on the paper P. The paper P having an image formed thereon is discharged into a paper discharge tray 118 by the conveyance roller pairs 112, 113, and 114.

Each ink cartridge stores an inkjet ink of an embodiment.

The inkjet emulsion ink according to one embodiment contains an aqueous liquid, an oil liquid, a polyoxyethylene hydrogenated castor oil, and a pigment. The oil liquid is what is known as a water-insoluble liquid. The pigment is dispersed in the emulsion of the aqueous liquid and the oil liquid emulsified by the polyoxyethylene hydrogenated castor oil.

Because such an emulsion is used as the dispersion medium, the inkjet emulsion ink according to the embodiment has the characteristics of both aqueous ink and oil ink. Specifically, the ink of the embodiment has superior dryness and permeability, and enables a high-quality image to be formed on paper medium. Further, because of the superior dispersion stability of the pigment in the ink, the ink can be stably ejected through the printer head nozzles.

As used herein, the "paper medium" generally refers to various kinds of paper medium intended for printing. The paper medium can be broadly classified into enamel paper and non-enamel paper, the former including art paper and coat paper to which materials for improving print characteristics are applied, and the latter representing a class of papers that exploits the characteristics of the paper itself. The paper medium has a variety of applications, such as in books, documents, newspapers, wrapping, and printer papers. The paper medium also includes thick papers such as cardboards, paper containers, and boxboards. For example, so-called plain paper such as copy paper to be used in a copier or a printer for office or home use is a typical paper medium.

As described above, in the embodiment, the aqueous liquid and the oil liquid are emulsified by the polyoxyethylene hydrogenated castor oil, and the pigment is dispersed in the emulsion.

The pigment is not particularly limited, and may be an inorganic pigment or an organic pigment. Examples of inorganic pigment include titanium oxide and iron oxide. Further, carbon black produced by known methods such as a contact method, a furnace method, and a thermal method also can be used.

As the organic pigment, for example, an azo pigment (such as an azo lake pigment, an insoluble azo pigment, a condensed azo pigment, or a chelate azo pigment), a polycyclic pigment (such as a phthalocyanine pigment, a perylene pigment, a perinone pigment, an anthraquinone pigment, a quinacridone pigment, a dioxazine pigment, a thioindigo pigment, an isoindolinone pigment, or a quinophthalone pigment), a dye chelate (such as a basic dye type chelate, or an acid dye type chelate), a nitro pigment, a nitroso pigment, Aniline Black or the like can be used.

Specific examples of the carbon black which is used as the black ink include No. 2300, No. 900, MCF88, No. 33, No. 40, No. 45, No. 52, MA7, MA8, MA100, and No. 2200B (all of which are manufactured by Mitsubishi Chemical Corporation), Raven 5750, Raven 5250, Raven 5000, Raven 3500, Raven 1255, and Raven 700 (all of which are manufactured by Columbian Chemicals Company), Regal 400R, Regal 330R, Regal 660R, Mogul L, Monarch 700, Monarch 800, Monarch 880, Monarch 900, Monarch 1000, Monarch 1100, Monarch 1300, and Monarch 1400 (all of which are manufactured by Cabot Corporation), and Color Black FW1, Color Black FW2, Color Black FW2V, Color Black FW18, Color Black FW200, Color Black S150, Color Black S160, Color Black S170, Printex 35, Printex U, Printex V, Printex 140U, Special Black 6, Special Black 5, Special Black 4A, and Special Black 4 (all of which are manufactured by Degussa AG).

Specific examples of the pigment which is used in the yellow ink include C.I. Pigment Yellow 1, C.I. Pigment Yellow 2, C.I. Pigment Yellow 3, C.I. Pigment Yellow 12, C.I. Pigment Yellow 13, C.I. Pigment Yellow 14C, C.I. Pigment Yellow 16, C.I. Pigment Yellow 17, C.I. Pigment Yellow 73, C.I. Pigment Yellow 74, C.I. Pigment Yellow 75, C.I. Pigment Yellow 83, C.I. Pigment Yellow 93, C.I. Pigment Yellow 95, C.I. Pigment Yellow 97, C.I. Pigment Yellow 98, C.I. Pigment Yellow 109, C.I. Pigment Yellow 110, C.I. Pigment Yellow 114, C.I. Pigment Yellow 128, C.I. Pigment Yellow 129, C.I. Pigment Yellow 138, C.I. Pigment Yellow 150, C.I. Pigment Yellow 151, C.I. Pigment Yellow 154, C.I. Pigment Yellow 155, C.I. Pigment Yellow 180, and C.I. Pigment Yellow 185.

Specific examples of the pigment which is used in the magenta ink include C.I. Pigment Red 5, C.I. Pigment Red 7, C.I. Pigment Red 12, C.I. Pigment Red 48(Ca), C.I. Pigment Red 48(Mn), C.I. Pigment Red 57(Ca), C.I. Pigment Red 57:1, C.I. Pigment Red 112, C.I. Pigment Red 122, C.I. Pigment Red 123, C.I. Pigment Red 168, C.I. Pigment Red 184, C.I. Pigment Red 202, and C.I. Pigment Violet 19.

Specific examples of the pigment which is used in the cyan ink include C.I. Pigment Blue 1, C.I. Pigment Blue 2, C.I. Pigment Blue 3, C.I. Pigment Blue 15:3, C.I. Pigment Blue 15:4, C.I. Pigment Blue 15:34, C.I. Pigment Blue 16, C.I. Pigment Blue 22, C.I. Pigment Blue 60, C.I. Vat Blue 4, and C.I. Vat Blue 60.

Since the ink is an inkjet ink, it is preferred that the pigment has an average particle diameter of from about 10 to 300 nm. It is more preferred that the pigment has an average particle diameter of from about 10 to 200 nm.

The average particle diameter of the pigment can be measured using a particle diameter analyzer according to a dynamic light scattering method. An example of a particle diameter analyzer is HPPS (Malvern Instruments Ltd.).

The pigment may be used in the state of a pigment dispersion. The pigment dispersion may be prepared by dispersing the pigment in, for example, water or alcohol using a dispersant. Examples of dispersant include surfactants, water-soluble resins, and water-insoluble resins. Alternatively, the pigment may be used in the form of a self-dispersible pigment dispersible in water or in other medium, without using a dispersant. The self-dispersible pigment is a pigment to which at least one functional group selected from a carbonyl group, a carboxyl group, a hydroxyl group, and a sulfone group or a salt thereof is bound through a surface treatment. Examples of the surface treatment include a vacuum plasma treatment, a diazo coupling treatment, and an oxidation treatment. The self-dispersible pigment is obtained by grafting a functional group or a molecule containing a functional group on the surface of a pigment through such a surface treatment.

The pigment content of the ink is preferably 2 to 20% by weight of the total ink. Within this range, prints with necessary image density can be formed without accompanying problems in ink storage stability and ejection performance. The pigment content of the ink is more preferably 2 to 10% by weight.

The inkjet emulsion ink according to the embodiment can be obtained by blending the pigment dispersion and a dispersion medium of a predetermined mixture. The dispersion medium includes the aqueous liquid, the oil liquid, and the emulsifier polyoxyethylene hydrogenated castor oil. The dispersion medium is the emulsion of the aqueous liquid and the oil liquid. Because such a dispersion medium is used, the ink of the embodiment has the advantages of both aqueous ink and oil ink. Specifically, the permeation of the ink into the paper medium becomes faster than that of the aqueous ink, and approaches the level of the oil ink. Drying of the ink from the paper medium also becomes faster than that of the aqueous ink, and approaches the level of the oil ink. Further, the resulting image quality is comparable to that of the aqueous ink.

In the inkjet emulsion ink of the embodiment, the aqueous liquid content is preferably 60 to 75% by weight of the total ink. The effect of the oil liquid becomes too large if the aqueous liquid content is too small, and it becomes difficult to suppress permeation of the ink into the paper medium. On the other hand, desired levels of permeability cannot be obtained if the aqueous liquid content is too large, though the quality of the resulting image improves. In this case, the permeation drying time of the ink also becomes longer. The aqueous liquid content is more preferably 65 to 70% by weight of the total ink.

It is preferred that at least 60% by weight of the aqueous liquid is water. If the aqueous liquid were entirely water, the effect of the aqueous liquid on the dispersion stability of the color pigment is decreased, and therefore, the storage stability of the ink is improved.

The aqueous liquid may contain a water-soluble compound. In this case, the viscosity of the ink is adjusted, a storage property and a moisture retaining property can be improved. Also, the ejection stability of the ink is further more improved. The water-soluble compound may be a solid or a liquid.

Examples of the water-soluble compound include glycerin, diglycerin, polyglycerin, ethylene glycol, diethylene glycol, triethylene glycol, polyethylene glycol, polypropylene glycol, 1,5-pentanediol, 1,6-hexanediol, 1,2,6-hexanetriol, 1,2,4-butanetriol, 1,2,3-butanetriol, 3-methyl-1,3,5-pentanetriol, sorbitol, mannitol, and maltitol.

The aqueous liquid may contain water-soluble resin. By blending water-soluble resin, the viscosity of the inkjet emulsion ink of the embodiment can be adjusted within a desired range. The water-soluble resin also serves to improve the rubfastness of the resulting prints. Examples of water-soluble resin include polyvinyl alcohol, hydroxypropylcellulose, carboxymethylcellulose, hydroxyethylcellulose, methylcellulose, water-soluble acrylic resin, polyvinylpyrrolidone, gum arabic, dextrin, casein, and peptin. Water-soluble acrylic resin is particularly preferable. Fixing to recording medium such as paper improves with an ink containing a water-soluble acrylic resin, without losing pigment dispersibility in the ink.

The oil liquid content of the inkjet emulsion ink of the embodiment is preferably 10 to 30% by weight of the total ink. The resulting image quality may deteriorate if the oil liquid content is too large. On the other hand, if the oil liquid content is too small, the effects of the aqueous liquid increases, and dryness suffers. Paper medium distortion also becomes likely. The oil liquid content is preferably 15 to 20% by weight of the total ink.

The oil liquid is at least partly an aliphatic monoalcohol having 6 to 9 carbon atoms. The monoalcohol refers to an alcohol having a single hydroxyl group (OH group). Aliphatic alcohols having 6 to 9 carbon atoms are superior in terms of permeability. In other words, the ink containing an aliphatic alcohol having 6 to 9 carbon atoms easily soaks paper. It was, however, difficult to prepare a stable emulsion with an aliphatic alcohol having 6 to 9 carbon atoms. The present inventors found an optimal emulsifier, namely, polyoxyethylene hydrogenated castor oil, for obtaining an emulsion of an aliphatic alcohol having 6 to 9 carbon atoms and the aqueous liquid. The emulsifier will be described later.

The preferred aliphatic monoalcohols having 6 to 9 carbon atoms are n-hexanol, n-heptanol, and n-nonanol.

Preferably, the aliphatic monoalcohol accounts for at least 80% by weight of the oil liquid. Any remaining oil liquid in the paper causes bleeding or gloss, and lowers print quality. The aliphatic monoalcohol does not easily remain in the paper, and thus print quality can be improved with the aliphatic monoalcohol making up the total amount of the oil liquid.

The oil liquid may contain a water-insoluble organic solvent, examples of which include mineral oil such as paraffinic oil, naphthenic oil, spindle oil, and machine oil; and vegetable oil such as linseed oil, castor oil, soy oil, and tung oil.

The characteristics of the resulting ink will not be lost even in the presence of such a water-insoluble organic solvent, provided that its content is 20% by weight or less of the oil liquid. For example, with the naphthenic oil contained in about 10% by weight of the oil liquid, permeation dryness can be further improved.

The inkjet emulsion ink of the embodiment contains the polyoxyethylene hydrogenated castor oil. The polyoxyethylene hydrogenated castor oil serves as an emulsifier. Specific examples of polyoxyethylene hydrogenated castor oil include Emanon CH-25, Emanon CH-40, Emanon CH-60(K), and Emanon CH-80 (all available from Kao Corporation); NIKKOL HCO-5, NIKKOL HCO-10, NIKKOL HCO-20, NIKKOL HCO-30, NIKKOL HCO-40, NIKKOL HCO-50, NIKKOL HCO-60, NIKKOL HCO-80, and NIKKOL HCO-100 (all available from Nikko Chemicals Co., Ltd.); EMALEX HC-10, EMALEX HC-20, EMALEX HC-30, EMALEX HC-40, EMALEX HC-50, and EMALEX HC-60 (all available from Nihon Emulsion Co., Ltd.).

Specifically, the polyoxyethylene hydrogenated castor oil is preferably a compound represented by the following general formula A. 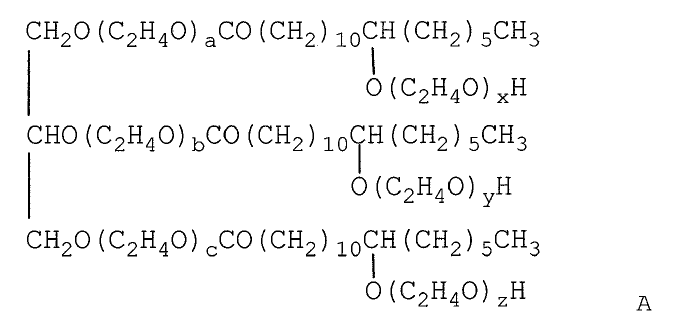 In the formula, n=a+b+c+x+y+z, and satisfies 10≤n≤60.

Emanon CH-25, Emanon CH-40, Emanon CH-60(K), and Emanon CH-80 are all classified as compounds of the general formula A.

The polyoxyethylene hydrogenated castor oil can exhibit effects without accompanying any problem, if contained in 5 to 20% by weight of the total inkjet ink. The amount of polyoxyethylene hydrogenated castor oil is more preferably 10 to 20% by weight of the total ink.

By blending the polyoxyethylene hydrogenated castor oil, a stable emulsion of the aliphatic monoalcohol having 6 to 9 carbon atoms and the aqueous liquid can be obtained.

In the inkjet emulsion ink of the embodiment, the aqueous liquid and the oil liquid are contained in the emulsion. The aqueous liquid and the oil liquid have different permeation rates for paper medium. Specifically, the aqueous liquid has a slower permeation rate, and the oil liquid permeates faster than the aqueous liquid. Accordingly, the aqueous liquid and the oil liquid start separating from each other when they permeate in the paper medium.

The pigments contained in the ink are stably dispersed in the emulsion emulsifying the aqueous liquid and the oil liquid; however, the dispersion stability of the pigments in the ink decreases as the aqueous liquid and the oil liquid separate from each other. Because the compatibility between the aqueous liquid and the oil liquid is disrupted, the pigments start to agglomerate, with the result that the permeation of the pigments into the paper is suppressed.

Because the pigments remain near the paper surface, the resulting image density improves more than that obtained with the oil ink. Because the oil liquid is contained as a part of the dispersion medium, the aqueous liquid content of the ink is reduced more than in common aqueous inks. As a result, curling, cockling, and other adverse effects on paper medium can be suppressed.

Further, because the oil liquid itself has low surface tension, the surface tension of the ink is reduced. Aqueous ink that contains no oil liquid requires the addition of a surfactant in order to suppress surface tension. By the inclusion of both the aqueous liquid and the oil liquid, addition of a surfactant becomes optional, and the formulation can be simplified.

The inkjet emulsion ink of the embodiment can be prepared by mixing a pigment dispersion and the emulsion of aqueous liquid and oil liquid emulsified by the polyoxyethylene hydrogenated castor oil. The desired inkjet emulsion ink can be obtained upon addition of an optional additive to the mixture.

Since the ink is for inkjet printing, the inkjet emulsion ink according to one embodiment should have a viscosity suitable for ejection from a nozzle of a head in an inkjet printer. Specifically, the viscosity of the ink at 25°C is preferably from 3 to 50 mPa·s. If the viscosity is 30 mPa·s or less, the controlled head temperature during an ejection operation can be set to a relatively low temperature.

In order to set optimum conditions for inkjet emulsion ink properties such as ejection performance, moisture retaining property, storage stability, and appropriate property values, additional components such as a surfactant, a moisturizer, and resin may be blended to the extent that the effects are not lost.

Examples of surfactant include polyoxyethylenealkyl ether, polyoxyalkylenealkyl ether, polyoxyethylene polycyclic phenylether, polyoxyalkylene polycyclic phenylether, glycerin fatty acid ester, and EO adducts of dimethylolheptane.

Acetyleneglycol surfactants and fluorosurfactants also can be used. Examples of acetyleneglycol surfactant include 2,4,7,9-tetramethyl-5-decyne-4,7-diol, 3,6-dimethyl-4-octine-3,6-diol, and 3,5-dimethyl-1-hexin-3-ol. Specifically, Surfynol 104, 61, 465, 485, and TG (Air Products) can be used, for example.

Examples of fluorosurfactant include a perfluoroalkylethylene oxide adduct, perfluoroalkylamine oxide, perfluoroalkyl carboxylate, and perfluoroalkyl sulfonic acid. Specifically, Megafac F-443, F-444, F-470, F-494 (DIC Corporation), Novec FC-430, FC-4430 (3M), and Surflon S-141, S-145, S-111N, S-113 (AGC Seimi Chemical Co., Ltd.) can be used.

The surfactant can exhibit its effect without causing any inconvenience, as long as it is about 1.0% by weight or less of the total ink.

Additives such as a pH adjuster, a preservative, and/or an anti-fungal agent may be blended, as required. Examples of pH adjuster include potassium dihydrogen phosphate, disodium hydrogen phosphate, and sodium hydroxide.

Examples of preservative and anti-fungal agent include sodium benzoate, pentachlorophenol sodium, 2-pyridinethiol-1-oxide sodium, sodium sorbate, sodium dehydroacetate, and 1,2-dibenzisothiazolin-3-one (Proxel CRL, Proxel BDN, Proxel GXL, Proxel XL-2, Proxel TN; available from ICI).

Print image quality and storage stability can be further improved by blending these additives.

Examples of the inkjet emulsion ink are described below.

Aqueous liquids presented in Table 1, and oil liquids presented in Table 2 were prepared.

**Table 1**

| Abbreviation | Compound name |
|---|---|
| W1 | Water |
| W2 | Glycerin |

**Table 2**

| Abbreviation | Compound name |
|---|---|
| OL1 | n-Nonanol |
| OL2 | n-Heptanol |
| OL3 | n-Hexanol |
| OL4 | n-Pentanol |
| OL5 | n-Decanol |
| OL6 | Glycol ether compound |
| OL7 | Diglycol ether compound |
| OL8 | Mineral oil |

The compounds OL1, OL2, and OL3 in Table 2 are aliphatic monoalcohols having 6 to 9 carbon atoms. Note that the glycol ether compound OL6 is specifically butylpropylene glycol, and classifies as an aliphatic monoalcohol having 6 to 9 carbon atoms. The diglycol ether compound OL7 is specifically butylpropylene diglycol.

The compounds presented in Table 3 were prepared as the emulsifiers.

**Table 3**

| Abbreviation | Compound name |
|---|---|
| E1 | Emanon CH-25 |
| E2 | Emanon CH-40 |
| E3 | Emanon CH-60(K) |
| E4 | Uniox HC-20 |
| E5 | Emanon CH-80 |
| E6 | pyrogallol |

E1, E2, E3, E4, and E5 in Table 3 are all polyoxyethylene hydrogenated castor oils, and are represented by the following general formula A.

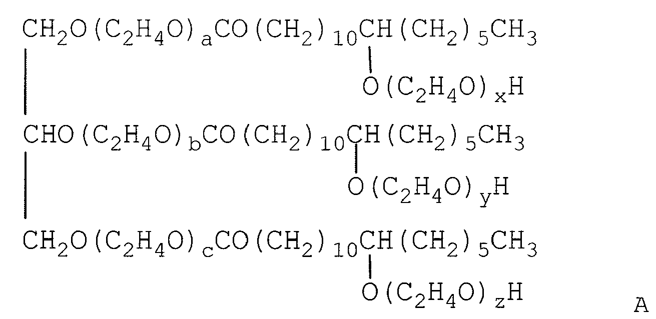

In the formula, n=a+b+c+x+y+z, and satisfies 10≤n≤60.

The values of n in the compounds E1, E2, E3, E4, and E5 are listed in Table 4 below.

**Table 4**

| Abbreviation | n |
|---|---|
| E1 | 25 |
| E2 | 40 |
| E3 | 60 |
| E4 | 20 |
| E5 | 80 |

Pyrogallol E6 is represented by the following formula.

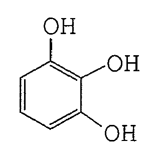

Dispersion medium (emulsions) for ink samples No. 1 to No. 25 were prepared by blending the components in the formulations presented in Table 5 below. In Table 5, the amounts of aqueous liquid (W.lq.), oil liquid (OL.lq.), and emulsifier in the ink are percent by weight.

The components below were mixed at 5,000 rpm for 30 min using a homegenizer to obtain emulsions. The resulting emulsions were of an O/W type.

**Table 5**

| No. | W. lq. | | OL. lq. | | | | | | | | Emulsifier | | | | | |
|---|---|---|---|---|---|---|---|---|---|---|---|---|---|---|---|---|
| | W1 | W2 | OL1 | OL2 | OL3 | OL4 | OL5 | OL6 | OL7 | OL8 | E1 | E2 | E3 | E4 | E5 | E6 |
| 1 | 66 | | 16 | | | | | | | | 13 | | | | | |
| 2 | 68 | | 16 | | | | | | | | 13 | | | | | |
| 3 | 68 | | 16 | | | | | | | | 13 | | | | | |
| 4 | 68 | | 16 | | | | | | | | 13 | | | | | |
| 5 | 68 | | 16 | | | | | | | | | | 11 | | | |
| 6 | 67 | | | 15 | | | | | | | 13 | | | | | |
| 7 | 67 | | | | 15 | | | | | | 13 | | | | | |
| 8 | 65 | | 16 | | | | | | | | | 14 | | | | |
| 9 | 65 | | 16 | | | | | | | | | 14 | | | | |
| 10 | 68 | | | | | | 17 | | | | 10 | | | | | |
| 11 | 68 | | | | | | | 17 | | | 10 | | | | | |
| 12 | 68 | | | | | | | | 17 | | 10 | | | | | |
| 13 | 68 | | | | | | | | | 17 | 10 | | | | | |
| 14 | 70 | | | 15 | | | | | | | | | | 10 | | |
| 15 | 70 | | | 15 | | | | | | | | | | | 10 | |
| 16 | 70 | | | | | 15 | | | | | 10 | | | | | |
| 17 | 77 | | 8 | | | | | | | | 10 | | | | | |
| 18 | 72 | | 10 | | | | | | | | 13 | | | | | |
| 19 | 55 | | 30 | | | | | | | | | 10 | | | | |
| 20 | 60 | | | 22 | | | | | | | 13 | | | | | |
| 21 | 60 | 5 | 15 | | | | | | | | 15 | | | | | |
| 22 | 80 | | 13 | | | | | | | | | | | | | |
| 23 | 76 | | 13 | | | | | | | | 4 | | | | | |
| 24 | 58 | | 13 | | | | | | | | 22 | | | | | |
| 25 | 66 | | 16 | | | | | | | | | | | | | 13 |

Then, the color component was added to each sample to obtain ink samples Nos. 1 to 25, as presented in Table 6 below.

The following self-dispersible pigments were used as the color pigments.
D1: Cab-O-JET400B (Cabot)
D2: Cab-O-JET465M (Cabot)
D3: Cab-O-JET470Y (Cabot)
D4: Cab-O-JET450C (Cabot)

In all self-dispersible pigments, the pigments having surface functional groups were dispersed in water. The amount of water in the dispersion is contained in the amount of aqueous liquid in Table 5. The amounts of solid component (color pigment) are also presented in Table 6.

**Table 6**

| No. | Pigment | | | |
|---|---|---|---|---|
| | D1 | D2 | D3 | D4 |
| 1 | 5 | | | |
| 2 | | 3 | | |
| 3 | | | 3 | |
| 4 | | | | 3 |
| 5 | 5 | | | |
| 6 | 5 | | | |
| 7 | 5 | | | |
| 8 | 5 | | | |
| 9 | 5 | | | |
| 10 | 5 | | | |
| 11 | 5 | | | |
| 12 | 5 | | | |
| 13 | 5 | | | |
| 14 | 5 | | | |
| 15 | 5 | | | |
| 16 | 5 | | | |
| 17 | 5 | | | |
| 18 | 5 | | | |
| 19 | 5 | | | |
| 20 | 5 | | | |
| 21 | 5 | | | |
| 22 | 5 | | | |
| 23 | 5 | | | |
| 24 | 5 | | | |
| 25 | 5 | | | |

Storage stability of the ink samples was examined.

The inks were stored in a thermostat bath at 65°C. After one week, the presence or absence of separation and the viscosity increase ratio of the inks were examined. The presence or absence of separation was visually observed. The percentage increase of viscosity was calculated according to the formula: 100((V₇-V₀)/V₀). The V₇ denotes the viscosity after one week, and the V₀ denotes the initial viscosity. The viscosity was measured using a cone-plate type viscosity meter, VISCOMETER TV-22 (manufactured by Toki Sangyo Co., Ltd.).

In comprehensive consideration of the presence or absence of separation and the percentage increase of viscosity of the ink, the storage stability was evaluated according to the following criteria.
A: No separation, and percentage viscosity increase of less than ± 10%
B: Separation that disappears upon stirring, and percentage viscosity increase of less than ± 10%
C: Separation, or percentage viscosity increase of ± 10% or more

Toshiba Copy Paper was prepared as plain paper, and was printed to examine dryness and print quality. The CB-1 head (Toshiba Tec) was installed in the recording apparatus used.

For the evaluation of dryness, solid printing at 100% duty was performed on an area of 10 mm × 10 mm of the plain paper. After leaving the resulting plain paper as such for a predetermined time, new plain paper of the same type was laminated on the printed portion, and a weight of 300 g was placed thereon. After 10 seconds, the laminated plain paper was separated, and it was confirmed whether or not the ink was adhered.

The time until the new plain paper was laminated after the solid printing was set to 5 seconds, 10 seconds, and 30 seconds. In each of the cases, adhesion of the ink was visually examined and evaluation was performed according to the following criteria.
A: No adhesion was observed when the set time was 5 seconds.
B: Adhesion was observed when the set time was 5 seconds and no attachment was observed when the set time was 10 seconds.
C: Adhesion was observed when the set time was 10 seconds and no adhesion was observed when the set time was 30 seconds.

For the evaluation of print quality, text printing and solid image printing were made on the plain paper. The printed texts were visually checked for bleeding and feathering. Further, solid print image density was examined using an X-Rite densitometer, and the image density on the front and back of the paper was examined.

The shape index of the dots in the printed image was calculated using the formula (circumferential length)²/(4π × area). The shape index is a measure of evaluation quantifying the extent of bleeding. The circumferential length and area were determined by image analysis using a dot analyzer. The value approaches 1 as the dot shape irregularities become smaller. Evaluation was made according to the criteria presented in Table 7 below, by considering the front image density, back image density, and shape index together.

**Table 7**

| Evaluation | Image density(Front) | Image density(Back) | Shape index |
|---|---|---|---|
| A | 1.25 or more | 0.2 or less | 1.0 or more and less than 1.8 |
| B | 1.2 or more | 0.3 or less | 1.8 or more and less than 2.6 |
| C | 1.1 or less | 0.4 or less | 2.6 or more |

Table 7 below summarizes the storage stability, dryness, and print quality of each ink.

**Table 8**

| Ink No. | storage stability | Dryness | Print quality |
|---|---|---|---|
| 1 | A | A | A |
| 2 | A | A | B |
| 3 | A | A | B |
| 4 | A | A | B |
| 5 | A | A | A |
| 6 | A | B | A |
| 7 | A | B | A |
| 8 | A | A | A |
| 9 | A | A | A |
| 10 | C | B | B |
| 11 | A | B | B |
| 12 | C | B | B |
| 13 | C | C | C |
| 14 | A | B | B |
| 15 | B | B | B |
| 16 | C | B | B |
| 17 | A | B | B |
| 18 | A | B | B |
| 19 | A | B | B |
| 20 | A | A | B |
| 21 | A | B | B |
| 22 | A | B | B |
| 23 | B | B | B |
| 24 | B | B | B |
| 25 | B | B | C |

Samples fail when the result of evaluation for any of the three criteria is "C".

As presented in Table 8, ink No. 10 has poor storage stability. As presented in Table 5, the oil liquid contained in ink No. 10 is OL5, which is n-decanol having 10 carbon atoms, as presented in Table 2. Storage stability cannot be ensured even with the aliphatic monoalcohol, if the number of carbons is not 6 to 9.

Ink No. 12 has poor storage stability. As presented in Table 5, the oil liquid contained in ink No. 12 is OL7, which is a diglycol ether compound, as presented in Table 2. Because the oil liquid is not monoalcohol, storage stability cannot be ensured in ink No. 12.

Storage stability, dryness, and print quality are all poor in ink No. 13. As presented in Table 5, the oil liquid contained in ink No. 13 is OL8, which is mineral oil, as presented in Table 2. Inkjet emulsion ink with desired characteristics cannot be obtained if the oil liquid is not an aliphatic monoalcohol having 6 to 9 carbon atoms.

Ink No. 16 has poor storage stability. As presented in Table 5, the oil liquid contained in ink No. 16 is OL4, which is n-pentanol having 5 carbon atoms, as presented in Table 2. n-Pentanol is highly volatile, which makes it difficult to obtain stable ejection performance. As demonstrated above, storage stability cannot be ensured even with the aliphatic monoalcohol, if the number of carbon atoms is not 6 to 9.

Ink No. 25 has poor storage stability. As presented in Table 5, the emulsifier contained in ink No. 25 is E6, which is not polyoxyethylene hydrogenated castor oil. It was confirmed from the result for ink No. 25 that the aliphatic monoalcohol having 6 to 9 carbon atoms and the aqueous liquid do not stably emulsify in the absence of the polyoxyethylene hydrogenated castor oil.

The oil liquids contained in ink Nos. 1 to 9, 11, 14, 15, and 17 to 24 are all aliphatic monoalcohols having 6 to 9 carbon atoms. These inks also contain polyoxyethylene hydrogenated castor oil.

By satisfying these conditions, the resulting inkjet emulsion ink had superior dryness and permeability. Further, the ink can form a high-quality image on paper medium.

Ink Nos. 23 and 24 have basically the same composition as ink No. 1, except for the content of the liquid component. Ink No.1 has superior results to ink Nos. 23 and 24 with regard to all of storage stability, dryness, and print quality. It can therefore be said that the composition of ink No.1 is more preferable than the compositions of ink Nos. 23 and 24. Specifically, in the ink of the embodiment, the aqueous liquid content is preferably 60 to 75% by weight, and the content of the polyoxyethylene hydrogenated castor oil is preferably 5 to 20% by weight.

The inkjet emulsion ink of the embodiment includes a stably dispersed pigment and excels in dryness, and can form a high-quality image on paper medium.

Further, by the inkjet recording method of the embodiment, a high-quality image can be formed on paper medium using an inkjet emulsion ink that includes a stably dispersed pigment and excels in dryness.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. An inkjet emulsion ink **characterized by** comprising:
a pigment;
an aqueous liquid;
an oil liquid that is at least partly an aliphatic monoalcohol having 6 to 9 carbon atoms; and
a polyoxyethylene hydrogenated castor oil that emulsifies the aqueous liquid and the oil liquid.

2. The ink according to claim 1, **characterized in that** the aliphatic monoalcohol is selected from the group consisting of n-hexanol, n-heptanol, and n-nonanol.

3. The ink according to claim 1, **characterized in that** the oil liquid accounts for 10 to 30% by weight of the inkjet emulsion ink.

4. The ink according to claim 1, **characterized in that** the aliphatic monoalcohol accounts for at least 80% by weight of the oil liquid.

5. The ink according to claim 1, **characterized in that** the aqueous liquid accounts for 60 to 75% by weight of the inkjet emulsion ink.

6. The ink according to claim 1, **characterized in that** at least 60% by weight of the aqueous liquid is water.

7. The ink according to any one of the preceding claims, **characterized in that** the polyoxyethylene hydrogenated castor oil is represented by following general formula A 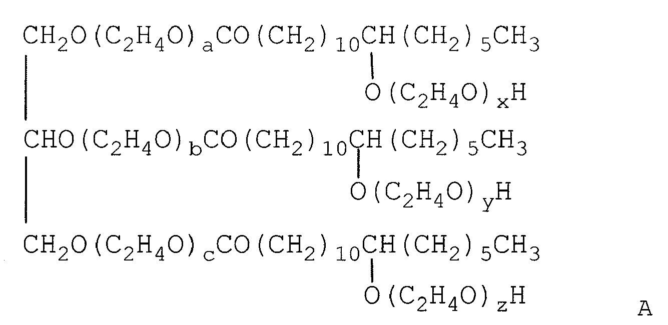 wherein n represents a+b+c+x+y+z and satisfies 10≤n≤60.

8. The ink according to claim 7, **characterized in that** the number n is n=25 in the general formula A.

9. The ink according to claim 7, **characterized in that** the number n is n=40 in the general formula A.

10. The ink according to any one of the preceding claims, **characterized in that** the polyoxyethylene hydrogenated castor oil accounts for 5 to 20% by weight of the inkjet emulsion ink.

11. The ink according to any one of the preceding claims, **characterized in that** the pigment accounts for 2 to 10% by weight of the inkjet emulsion ink.

12. The ink according to any one of the preceding claims, **characterized in that** a viscosity of the inkjet emulsion ink at 25°C is 3 to 50 mPa·s.

13. A method for inkjet printing **characterized by** comprising:
ejecting at least one type of ink composition from an inkjet head onto a paper medium to form an image, the ink composition being the inkjet emulsion ink according to any one of claims 1 to 12.

14. The method according to claim 13, **characterized in that** the image is formed using one type of ink composition.

15. The method according to claim 13, **characterized in that** the image is formed using two or more types of ink compositions of different colors.
